(19) Europäisches Patentamt
European Patent Office
Office européen des brevets

(11) **EP 3 293 499 B1**

(12) **EUROPÄISCHE PATENTSCHRIFT**

(45) Veröffentlichungstag und Bekanntmachung des Hinweises auf die Patenterteilung:
**13.03.2019   Patentblatt 2019/11**

(51) Int Cl.:
**G01F 25/00** *(2006.01)*      **G01F 1/60** *(2006.01)*
**G01F 15/00** *(2006.01)*      G01M 3/00 *(2006.01)*
G08B 21/00 *(2006.01)*

(21) Anmeldenummer: **17183247.0**

(22) Anmeldetag: **26.07.2017**

(54) **VERFAHREN ZUM BETREIBEN EINES MAGNETISCH-INDUKTIVEN DURCHFLUSSMESSGERÄTS UND MAGNETISCH-INDUKTIVES DURCHFLUSSMESSGERÄT**

METHOD OF OPERATING A MAGNETIC-INDUCTIVE FLOW METER AND MAGNETIC-INDUCTIVE FLOW METER

PROCÉDÉ DE FONCTIONNEMENT D'UN DÉBITMÈTRE MAGNÉTIQUE INDUCTIF ET DÉBITMÈTRE MAGNÉTIQUE INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2016   DE 102016115483**

(43) Veröffentlichungstag der Anmeldung:
**14.03.2018   Patentblatt 2018/11**

(73) Patentinhaber: **Krohne Messtechnik GmbH 47058 Duisburg (DE)**

(72) Erfinder: **FLROIN, Wilhelm 47198 Duisburg (DE)**

(74) Vertreter: **Gesthuysen Patent- und Rechtsanwälte Patentanwälte Huyssenallee 100 45128 Essen (DE)**

(56) Entgegenhaltungen:
**EP-B1- 1 285 237        JP-A- 2005 207 984
US-A1- 2010 100 026    US-A1- 2010 288 054**

EP 3 293 499 B1

**Beschreibung**

Die Erfindung geht aus von einem Verfahren zum Betreiben eines magnetisch-induktiven Durchflussmessgeräts, wobei das magnetisch-induktive Durchflussmessgerät wenigstens eine Messeinheit für die Messung des Durchflusses eines Mediums durch eine Rohrleitung, ein Gehäuse und wenigstens eine Steuer- und Auswerteeinheit aufweist, wobei die Messeinheit wenigstens eine Spule zur Erzeugung eines Magnetfelds aufweist, wobei wenigstens eine Kapazität in Zusammenhang mit der Spule gebildet und vorzugsweise innerhalb des Gehäuses vorhanden ist, wobei die Induktivität der Spule mit der Kapazität einen Schwingkreis bildet und wobei der Schwingkreis wenigstens eine ihn charakterisierende Messgröße aufweist. Darüber hinaus geht die Erfindung aus von einem magnetisch-induktiven Durchflussmessgerät.

Magnetisch-induktive Durchflussmessgeräte nutzen zur Bestimmung des Durchflusses eines Mediums durch eine Rohrleitung den Effekt, dass in einem leitfähigen Medium durch Wirkung eines Magnetfeldes auf bewegte Ladungsträger eine Spannung induziert werden kann, welche proportional zur Fließgeschwindigkeit des Mediums ist. Zur Induktion der Spannung weisen magnetisch-induktive Durchmessgeräte eine Messeinheit mit einer Spulenanordnung auf, die im Betrieb auf der Rohrleitung angeordnet ist und die im Betrieb mit einem sich zeitlich ändernden Strom durchflossen wird. Auf diese Weise wird innerhalb der Rohrleitung, insbesondere in dem zu vermessenden Medium, ein Magnetfeld erzeugt, das eine Ladungstrennung im Medium bewirkt und insofern eine Spannung induziert, die abhängig von der Fließgeschwindigkeit des Mediums ist. Zur Erfassung der induzierten Spannung sind innerhalb der Messeinheit quer zum Magnetfeld Elektroden angeordnet, auf die es zur nachfolgenden Darstellung der Erfindung jedoch nicht ankommt.

Insbesondere in den Anschlussbereichen der Messeinheit an weitere Bauteile und/oder im Bereich der Elektroden kann es jedoch trotz der einfachen Bauweise und Integration eines solchen Messgeräts in das Anwendungsumfeld zu einer Leckage kommen. Leckagen an diesen Stellen haben häufig das Eindringen von Feuchtigkeit in das Gehäuse und damit die Messeinheit zu Folge, was die Messung von kleinen Elektrodenspannungen beeinflusst oder sogar unmöglich macht. Um einen zuverlässigen Betrieb eines magnetisch-induktiven Durchflussmessgeräts zu gewährleisten und um Leckagen in dem gesammten Prozess zu erkennen und Folgeschäden zu vermeiden, ist es daher fundamental, Leckagen der Messeinheit frühzeitig zu erfassen, um rechtzeitig Maßnahmen zur Behebung von Undichtigkeiten ergreifen zu können.
Aus der Druckschrift EP 1 285 237 B1 ist ein magnetisch-induktives Durchflussmessgerät mit Diagnoseschaltkreis, welcher das Vorhandensein eines elektrischen Leckverlustes in dem Elektrodenschaltkreis des Durchflussmessgeräts erfasst, bekannt. Ein elektrischer Leckverlust entsteht häufig als Folge einer Leckage im Bereich der Elektroden, wodurch Prozessflüssigkeit um wenigstens eine der Elektroden herum in das Messgerät eindringt. Der Diagnoseschaltkreis misst Diagnosepotenziale von Elektrode zu Masse an jeder der beiden Elektroden und bildet die Summe aus den Diagnosepotenzialen. Die Summe zeigt an, ob ein elektrischer Leckverlust vorhanden ist.
Nachteilig an dem zuvor beschriebenen Durchflussmessgerät bzw. an dem dargestellten Verfahren ist es, dass sich das Verfahren auf den Nachweis einer Leckage im Bereich der Elektroden beschränkt.

Aus US 2010/288054 A1 und JP 2005 207984 A bekannte magnetisch-induktive Durchflussmessgeräte und ein aus US 2010/0100026 A1 bekanntes Feuchtigkeitsmessgerät erlauben die Erkennung einer Leckage.

Ausgehend von dem zuvor dargelegten Stand der Technik ist es Aufgabe der vorliegenden Erfindung ein Verfahren zum Betreiben eines magnetisch-induktiven Durchflussmessgeräts und ein Durchflussmessgerät anzugeben, das einen besonders zuverlässigen Betrieb des Durchflussmessgeräts gewährleistet.
Gemäß einer ersten Lehre der vorliegenden Erfindung wird diese Aufgabe durch ein eingangs genanntes Verfahren dadurch gelöst, dass der Schwingkreis mit einer Anregungsfrequenz f angeregt wird, dass die den Schwingkreis charakterisierende Messgröße bestimmt wird, dass in der Steuer- und Auswerteeinheit ein Vergleichswert der den Schwingkreis charakterisierenden Messgröße für den leckagefreien Fall hinterlegt ist und dass die den Schwingkreis charakterisierende Messgröße mit dem Vergleichswert verglichen wird.
Erfindungsgemäß wurde zunächst erkannt, dass das Eindringen von Feuchtigkeit in die Messeinheit im Fall einer Leckage die Kapazität eines Kondensators beeinflusst. Um eine Änderung der Kapazität nachzuweisen, wird der Einfluss dieser Kapazität auf einen durch die Induktivität der Spule, die Kapazität und den ohmschen Leitungswiderstand der Spule gebildeten Schwingkreis betrachtet. Es wurde erkannt, dass eine Änderung der Kapazität ebenfalls die Eigenschaften dieses Schwingkreises verändert.

Grundsätzlich lässt sich die Kapazität C eines Kondensators gemäß folgendem Zusammenhang bestimmen:

$$C = \epsilon_0 * \epsilon_r * A / d,$$

wobei $\epsilon_0$ die elektrische Feldkonstante, $\epsilon_r$ die relative Permittivität, A die Kondensatoroberfläche und d der Abstand der Platten des Kondensators ist.

Dringt nun Feuchtigkeit zwischen die beiden Platten des Kondensators, so ändert sich die relative Permittivität $\epsilon_r$, wodurch sich in der Folge ebenfalls die Kapazität des Kondensators ändert.

Erfindungsgemäß wird wenigstens eine den durch die Induktivität der Spule und die Kapazität ausgebildeten Schwingkreis charakterisierende Messgröße bestimmt und diese Messgröße wird mit dem Vergleichswert der Messgröße im leckagefreien Fall verglichen. Erfindungsgemäß kann damit auf besonders einfache Weise eine Leckage der Messeinheit erfasst werden, da die ohnehin für die Durchflussmessung vorhandene Spule als Leckagesensor eingesetzt wird. Üblicherweise dienen die Spulen nur der Erzeugung eines Magnetfeldes, über die Spulen werden keine Messungen durchgeführt, die Durchflussmessung erfolgt über eine Spannungsmessung an den Elektroden des magnetisch-induktiven Durchflussmessgeräts. Erfindungsgemäß werden die felderregenden Spulen aber einer über die reine Felderregung hinausgehenden Funktionalität zugeführt, nämlich der Erkennung einer Leckage. Die für die Durchflussmessung erforderlichen Elektroden und der Teil der an die Elektroden angeschlossenen Mess- und Auswerteschaltung für den Durchfluss werden für die Leckageerkennung nicht benötigt.

Besonders vorteilhaft ist es, wenn die Kapazität durch die Spule ausgebildet wird. Die Kapazität kann dann sowohl die parasitäre Eigenkapazität, die sich zwischen den Windungen der Spule ausbildet oder auch die Kapazität, die die Spule mit den sie umgebenden Bauteilen ausbildet, insbesondere dem Gehäuse, sein. Es wird demnach kein separater Kondensator als eigenständiges Bauteil benötigt, vielmehr werden die dem System inhärenten und mit der felderregenden Spule in Zusammenhang stehenden Kapazitäten erfindungsgemäß genutzt.

Gemäß einer weiteren Ausgestaltung des erfindungsgemäßen Verfahrens wird als die den Schwingkreis charakterisierende Messgröße die Impedanz $\underline{Z}$ des Schwingkreises bestimmt. Ebenfalls vorteilhaft ist es, wenn als die den Schwingkreis charakterisierende Messgröße der Betrag der Impedanz $|\underline{Z}|$ bestimmt wird.

Grundsätzlich gibt die Impedanz Z eines Schwingkreises bei harmonischer Anregung mit der Anregungsfrequenz f das Verhältnis zwischen den Amplituden der Wechselspannung zu dem Wechselstrom sowie die Verschiebung der Phasenwinkel an. Eine Änderung der Kapazität des Schwingkreises wirkt sich insofern ebenfalls auf die Impedanz Z sowie auf den Betrag der Impedanz $|\underline{Z}|$ aus.

Vorzugsweise wird zur Bestimmung der Impedanz Z der Schwingkreis mit einem harmonischen Anregungssignal, insbesondere einer Wechselspannung der Anregungsfrequenz f angeregt und sowohl der Spannungsverlauf als auch der Stromverlauf werden erfasst. Aus den Verhältnissen der Amplituden und der Phasenverschiebung wird die Impedanz $\underline{Z}$ des Schwingkreises bestimmt. Die Verhältnisse der Amplituden des Strom- und Spannungsverlaufs entsprechen dem Betrag der Impedanz $|\underline{Z}|$. Dazu ist vorzugsweise eine Impedanzmesseinrichtung vorhanden, welche besonders bevorzugt in die Steuer- und Auswerteeinheit des Durchflussmessgeräts integriert ist.

Wichtig ist, dass gemäß diesem Ausführungsbeispiel der Vergleichswert der Impedanz Z bzw. dem Betrag der Impedanz $|\underline{Z}|$ des Schwingkreises mit der gleichen Anregungsfrequenz f bestimmt worden ist. Besonders vorteilhaft ist es, wenn die Anregungsfrequenz f der Resonanzfrequenz $f_0$ des Schwingkreises im leckagefreien Zustand entspricht. Die Resonanzfrequenz $f_0$ im leckagefreien Zustand wird vorzugsweise, wie nachfolgend beschrieben, aus dem Amplitudengang des Schwingkreises bestimmt.

Gemäß einer weiteren vorteilhaften Ausgestaltung des erfindungsgemäßen Verfahrens wird als die den Schwingkreis charakterisierende Messgröße alternativ oder zusätzlich die Resonanzfrequenz $f_0$ des Schwingkreises bestimmt.

Grundsätzlich ergibt sich die Resonanzfrequenz $f_0$ eines Schwingkreises im Idealfall aus folgendem Zusammenhang:

$$f_0 = \frac{1}{2\pi\sqrt{LC}},$$

wobei L die Induktivität der Spule und C die Kapazität des Kondensators ist, wobei der Kondensator, wie zuvor erläutert, nicht als separates Bauteil ausgebildet sein muss, sondern durch sich gegenüberstehende Potenzialflächen der Spule selbst oder durch sich gegenüberstehende Potenzialflächen der Spule mit anderen Potenzialflächen des Durchflussmessgeräts gebildet wird.

Eine Änderung der Kapazität des Schwingkreises bewirkt insofern ebenfalls eine Änderung der Resonanzfrequenz $f_0$. Die Bestimmung der Resonanzfrequenz $f_0$ als die den Schwingkreis charakterisierende Größe ist deshalb besonders vorteilhaft, da gemäß diesem Ausführungsbeispiel der Schwingkreis unabhängig von der Anregungsfrequenz f durch einen festen Wert charakterisiert werden kann.

Besonders bevorzugt erfolgt die Bestimmung der Resonanzfrequenz $f_0$ aus dem Amplitudengang des Schwingkreises. Dazu wird zunächst der Amplitudengang, das heißt der Betrag der Impedanz $|\underline{Z}|$ des Schwingkreises in Abhängigkeit von der Anregungsfrequenz f, bestimmt. Bei Anregung des Schwingkreises mit der Resonanzfrequenz $f_0$ weist der Amplitudengang ein Extremum, also ein Minimum oder ein Maximum, auf. Insofern lässt sich die Resonanzfrequenz $f_0$ aus dem Amplitudengang als Stelle des Extremums besonders leicht bestimmen.

Zur Bewertung, ob eine Leckage vorhanden ist, wird die gemessene Resonanzfrequenz $f_0$ mit dem Vergleichswert der Resonanzfrequenz $f_0$ des leckagefreien Zustandes verglichen.

In dem zu untersuchenden Schwingkreis ist die Kapazität entweder parallel zur Spule oder in Reihe mit der Spule angeordnet. Insofern ist der Schwingkreis entweder ein Parallelschwingkreis oder ein Serienschwingkreis.

Ist die Kapazität parallel zur Spule angeordnet, so wird sie vorzugsweise zwischen den einzelnen Windungen der Spule als parasitäre Eigenkapazität ausgebildet. Der durch die Spule und die parasitäre Eigenkapazität ausgebildete Schwingkreis ist in diesem Fall ein Parallelschwingkreis. Der Amplitudengang weist an der Stelle der Resonanzfrequenz $f_0$ ein Maximum auf.

Gemäß diesem Ausführungsbeispiel wird vorzugsweise zur Bestimmung der den Schwingkreis charakterisierenden Messgröße, insbesondere zu Bestimmung der Impedanz Z und/oder des Betrags der Impedanz $|\underline{Z}|$ und/oder der Resonanzfrequenz $f_0$ des Schwingkreises der Messbetrieb zur Messung des Durchflusses eines Mediums unterbrochen. Die Bestimmung der den Schwingkreis charakterisierenden Messgröße, insbesondere die Bestimmung der Impedanz Z und/oder des Betrags der der Impedanz $|\underline{Z}|$ und/oder der Resonanzfrequenz $f_0$ des Schwingkreises, erfolgt dann in einem Leckagemessvorgang. Ein solcher Leckagemessvorgang kann entweder spontan oder regelmäßig mit einer festen Kontrollfrequenz durchgeführt werden. Dies hat den Vorteil, dass das Durchflussmessgerät regelmäßig bezüglich einer möglichen Leckage kontrolliert wird.

Ist die Kapazität in Reihe mit der Spule angeordnet, so ist sie insbesondere zwischen der Spule und dem Gehäuse der Messeinheit ausgebildet. Der so ausgebildete Schwingkreis ist ein Serienschwingkreis. Der Amplitudengang weist an der Stelle der Resonanzfrequenz $f_0$ ein Minimum auf.

Auch gemäß diesem Ausführungsbeispiel wird vorzugsweise zur Bestimmung der den Schwingkreis charakterisierenden Messgröße, insbesondere zu Bestimmung der Impedanz $\underline{Z}$ und/oder des Betrags der der Impedanz $|\underline{Z}|$ und/oder der Resonanzfrequenz $f_0$ des Schwingkreises der Messbetrieb zur Messung des Durchflusses eines Mediums unterbrochen. Die Bestimmung der den Schwingkreis charakterisierenden Messgröße, insbesondere die Bestimmung der Impedanz $\underline{Z}$ und/oder des Betrags der der Impedanz $|\underline{Z}|$ und/oder der Resonanzfrequenz $f_0$ des Schwingkreises, erfolgt dann in einem Leckagemessvorgang. Ein solcher Leckagemessvorgang kann entweder spontan oder regelmäßig mit einer festen Kontrollfrequenz durchgeführt werden.

Gemäß einer weiteren bevorzugten Ausgestaltung des erfindungsgemäßen Verfahrens wird eine Warnung ausgegeben, wenn die den Schwingkreis charakterisierende Größe außerhalb des Abweichungsintervalls liegt. Gemäß dieser Ausgestaltung des Verfahrens ist es dem Anwender möglich, besonders schnell auf den fehlerhaften Zustand des Systems zu reagieren.

Weiterhin kann in der Messeinheit wenigstens ein zusätzlicher Feuchtesensor angeordnet sein, der parallel oder zeitlich versetzt zu einem der zuvor dargelegten Verfahren die Feuchtigkeit in der Messeinheit misst.

Gemäß einer zweiten Lehre der vorliegenden Erfindung wird die eingangs dargelegte Aufgabe durch ein magnetisch-induktives Durchflussmessgerät mit einer Messeinheit zur Messung des Durchflusses eines Mediums durch eine Rohrleitung, einem Gehäuse und mit einer Steuer- und Auswerteeinheit, wobei die Messeinheit wenigstens eine Spule zur Erzeugung eines Magnetfelds aufweist, wobei wenigstens eine in Zusammenhang mit der Spule stehende Kapazität - vorzugsweise innerhalb des Gehäuses - vorhanden ist, wobei die Induktivität der Spule mit der Kapazität einen Schwingkreis bildet und wobei der Schwingkreis wenigstens eine ihn charakterisierende Messgröße aufweist, dadurch gelöst, dass die Steuer- und Auswerteeinheit derart ausgestaltet ist, dass sie, wenn der Schwingkreis mit einer Anregungsfrequenz f angeregt wird, die den Schwingkreis charakterisierende Messgröße bestimmt, dass in der Steuer- und Auswerteeinheit ein Vergleichswert der den Schwingkreis charakterisierenden Messgröße für den leckagefreien Fall und ein Abweichungsintervall hinterlegt sind und dass die Steuer- und Auswerteeinheit die den Schwingkreis charakterisierende Messgröße mit dem Vergleichswert vergleicht.

Gemäß einer vorteilhaften Ausgestaltung des erfindungsgemäßen Durchflussmessgeräts ist die Steuer- und Auswerteeinheit derart ausgestaltet, dass sie im Betrieb eines der zuvor dargelegten Verfahren durchführt.

Dazu weist die Steuer- und Auswerteeinheit vorzugsweise eine Impedanzmesseinrichtung auf, welche derart ausgestaltet ist, dass sie im Betrieb die Impedanz $\underline{Z}$ und/oder den Betrag der Impedanz $|\underline{Z}|$ und/oder die Resonanzfrequenz $f_0$ des Schwingkreises bestimmt.

Vorzugsweise weist die Messeinheit wenigstens einen zusätzlichen Feuchtesensor auf, der im Betrieb die Feuchtigkeit innerhalb der Messeinheit misst.

Im Einzelnen gibt es nun eine Vielzahl von Möglichkeiten, das erfindungsgemäße Verfahren und das Durchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen

Fig. 1 ein erstes Ausführungsbeispiel eines erfindungsgemäßen Verfahrens,

Fig. 2 ein erstes Ausführungsbeispiel eines erfindungsgemäßen Durchflussmessgeräts,

Fig. 3 eine Darstellung eines Parallelschwingkreises mit einem beispielhaften Amplitudengang,

Fig. 4 ein zweites Ausführungsbeispiel eines erfindungsgemäßen Durchflussmessgeräts und

Fig. 5 eine Darstellung eines Serienschwingkreises mit einem beispielhaften Amplitudengang.

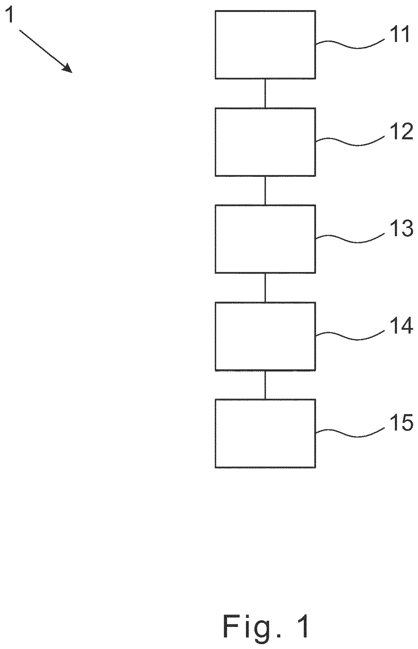

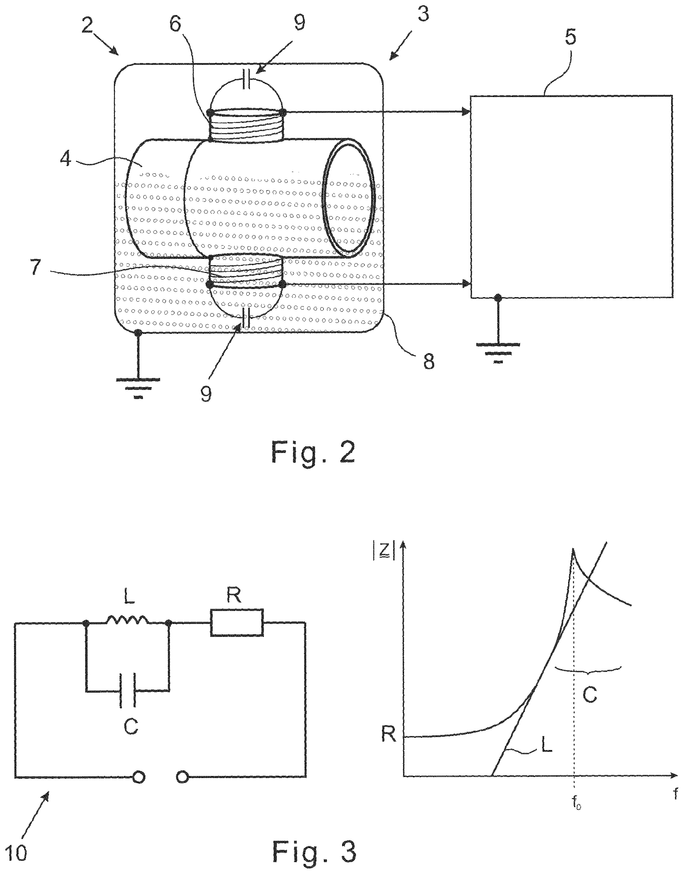

In den Fig. 1 und 2 ist dargestellt ein erstes Ausführungsbeispiel des erfindungsgemäßen Verfahrens 1 zum Betreiben eines magnetisch-induktiven Durchflussmessgeräts 2 und ein erfindungsgemäßes Durchflussmessgerät 2. Das magnetisch-induktive Durchflussmessgerät 2 weist eine Messeinheit 3 zur Messung des Durchflusses eines Mediums durch eine Rohrleitung 4, ein Gehäuse 8 und eine Steuer- und Auswerteeinheit 5 auf, wobei die Messeinheit 3 wenigstens eine Spule 6, 7 zur Erzeugung eines Magnetfelds aufweist. Vorliegend besteht die Spule 6, 7 aus zwei Teilen, einem ersten Spulenteil 6 und einem zweiten Spuleteil 7, die ober- und Unterhalb der Rohrleitung 4 angeordnet sind, um ein möglichst homogenes Magnetfeld zu erzeugen. Zur eigentlichen Durchflussmessung werden Elektroden benötigt, die üblicherweise im Wirkbereich des Magnetfeldes in der Rohrleitung 4 angeordnet sind. Auf diese Elektroden kommt es hier jedoch nicht an, weshalb sie aus Gründen der Übersichtlichkeit nicht dargestellt sind.

Die Spule 6, 7 weist eine parasitäre Eigenkapazität 9 auf, wobei die Induktivität der Spule 7 mit der parasitären Kapazität 9 und dem ohmschen Leitungswiderstand der Spule 7 einen Schwingkreis 10 bildet und wobei der Schwingkreis 10 wenigstens eine ihn charakterisierende Messgröße aufweist. Zur Verdeutlichung ist die parasitäre Kapazität 9 hier - in Fig. 2 - durch das Schaltbild eines Kondensators versinnbildlicht, es handelt sich bei der Kapazität 9 aber aber tatsächlich um die der Spule 6, 7 inhärente parasitäre Eigenkapazität 9.

Im vorliegenden Ausführungsbeispiel wird als die den Schwingkreis 10 charakterisierende Größe die Impedanz $Z$ des Schwingkreises 10 bei einer Anregungsfrequenz f, die der Resonanzfrequenz $f_0$ des Schwingkreises 10 im leckagefreien Zustand entspricht, bestimmt.

In einem ersten Schritt 11 wird dazu zunächst der Messbetrieb des Durchflussmessgeräts 2 unterbrochen. In einem nächsten Schritt 12 wird zur Bestimmung der Impedanz Z eine Wechselspannung mit einer Anregungsfrequenz f, welche der Resonanzfrequenz $f_0$ des Schwingkreises 10 im leckagefreien Zustand entspricht, an die Spule 6, 7 angelegt. Zur Bestimmung der Impedanz Z werden in einem nächsten Schritt 13 der Spannungs- und der Stromverlauf erfasst und die Impedanz Z bestimmt.

Für die Bewertung der so bestimmten Impedanz Z ist in der Steuer- und Auswerteeinheit 5 der Wert der Impedanz Z im Resonanzfall des Schwingkreises im leckagefreien Zustand als Vergleichswert mit einem Abweichungsintervall hinterlegt. In einem weiteren Schritt 14 wird der Messwert der Impedanz $Z$ mit dem Vergleichswert verglichen. Weicht der Messwert von dem Vergleichswert ab oder liegt der Messwert außerhalb eines Abweichungsintervalls, so wird in einem nächsten Schritt 15 eine Warnung ausgegeben, wodurch der Anwender rechtzeitig über einen vorliegenden fehlerhaften Zustand informiert wird.

In Fig. 2 ist dargestellt ein erstes Ausführungsbeispiel eines erfindungsgemäßen Durchflussmessgeräts 2 mit einer Messeinheit 3 zur Messung des Durchflusses eines Mediums durch eine Rohrleitung 4, mit einem Gehäuse 8 und mit einer Steuer- und Auswerteeinheit 5, wobei die Messeinheit 3 eine Spulen 6, 7 zur Erzeugung eines Magnetfelds aufweist. Die Spule 6, 7 besteht hier wieder aus aus zwei Spulenteilen 6, 7, die elektrisch miteinander verbunden sind und im Messbetrieb von demselben Strom durchflossen werden zur Erregung des für die Messung erforderlichen Magnetfeldes.

Im vorliegenden Ausführungsbeispiel ist eine Leckage in der Rohrleitung 4 vorhanden, wodurch Feuchtigkeit in das Gehäuse 8 und damit in die Messeinheit 3 eingedrungen ist. Dieser Feuchtigkeit ist insbesondere der Spulenteil 7 ausgesetzt.

Zudem ist dargestellt, dass die Spule 6, 7 eine parasitäre Eigenkapazität 9 aufweist.

Weiterhin ist eine Steuer- und Auswerteeinheit 5 vorhanden, welche sowohl die Ansteuerelektronik für die Feldspulen 6, 7 als auch eine Impedanzmesseinrichtung für die Impedanzmessung hinsichtlich der Spulen 6, 7 aufweist.

Die Steuer- und Auswerteeinheit 5 des dargestellten Durchflussmessgeräts 2 ist derart ausgestaltet, dass sie im Betrieb das in Fig. 1 beschriebene Verfahren durchführt. Demnach ist in Fig. 2 ein Durchflussmessgerät 2 dargestellt, das einen besonders zuverlässigen Betrieb gewährleistet.

Fig. 3 zeigt eine Darstellung eines Parallelschwingkreises 10, der sich innerhalb des Gehäuses 8 eines Durchflussmessgeräts 2 ausbildet. In der Darstellung wird der Schwingkreis 10 gebildet aus der Induktivität L der Spule 6, 7, der parasitären Eigenkapazität C der Spule 6, 7 und dem ohmschen Leitungswiderstand R der Spule 6, 7. Zudem ist beispielhaft der Amplitudengang, d. h. der Betrag der Impedanz $|\underline{Z}|$ in Abhängigkeit von der Anregungsfrequenz f des Schwingkreises 10 dargestellt. Die Darstellung zeigt, dass bei niedrigen Anregungsfrequenzen f sich der Schwingkreis 10 wie der ohmsche Widerstand R verhält. In Annäherung an die Resonanzfrequenz $f_0$ entspricht der Betrag der Impedanz $|\underline{Z}|$ dem Verhalten der Induktivität L. Im Resonanzfall weist der Betrag der Impedanz $|\underline{Z}|$ ein Maximum auf. Anschließend beeinflusst das Verhalten des Schwingkreises 10 die Kapazität C. Die Resonanzfrequenz $f_0$ des Schwingkreises kann besonders einfach als Stelle des Maximums bestimmt werden.

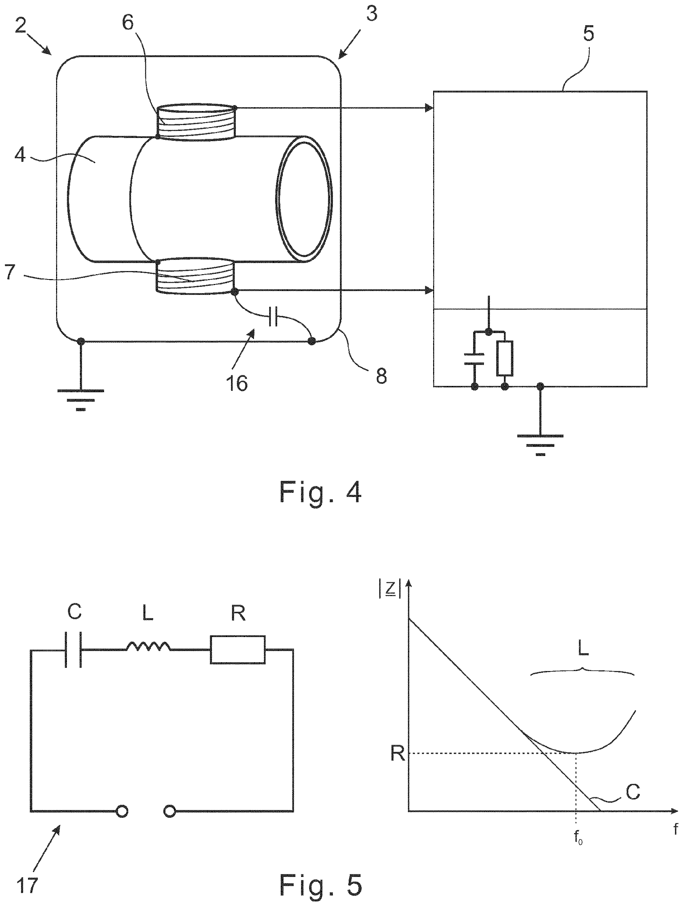

Fig. 4 zeigt ein zweites Ausführungsbeispiel eines erfindungsgemäßen Durchflussmessgeräts 2. Im dargestellten Ausführungsbeispiel ist die Steuer- und Auswerteeinheit 5 derart ausgestaltet, dass sie eine Änderung der parasitären Kapazität 11, welche sich zwischen der Spule 6, 7 und dem Gehäuse 8 ausbildet, bestimmt. Als die den Schwingkreis 17 charakterisierende Größe wird ebenfalls die Impedanz $\underline{Z}$ bestimmt. Die Impedanz $\underline{Z}$ kann über die Spule 6, 7 und das RC-Netzwerk gemessen werden. Alternativ, sofern die Impedanzmessung direkt Kontakt zur Erde aufweist, kann die Bestimmung der Impedanz Z auch parallel zu dem RC-Netzwerk erfolgen. Dies hat den Vorteil, dass die Impedanzbestimmung auch während einer laufenden Durchflussmessung erfolgen kann.

Fig. 5 zeigt eine Darstellung eines Serienschwingkreises 17, der sich innerhalb des Gehäuses 8 eines Durchflussmessgeräts 2, beispielsweise in dem zuvor beschriebenen zweiten Ausführungsbeispiel des erfindungsgemäßen Durchflussmessgeräts 2, ausbildet. In der Darstellung wird der Schwingkreis 17 gebildet aus der Induktivität L der Spule 6, 7, der Kapazität C zwischen der Spule 7 und dem Gehäuse 8 und dem ohmschen Leitungswiderstand R der Spule 7. Zudem ist beispielhaft der Amplitudengang, d.h. der Betrag der Impedanz $|\underline{Z}|$ in Abhängigkeit der Anregungsfrequenz f des Schwingkreises 17 dargestellt. Die Darstellung zeigt, dass bei niedrigen Frequenzen sich der Schwingkreis 12 wie die Kapazität C verhält. Im Resonanzfall ist der Betrag der Impedanz $|\underline{Z}|$ minimal und entspricht dem ohmschen Widerstand R. Bei höheren Frequenzen beeinflusst zunehmend die Induktivität L das Verhalten des Schwingkreises 12. Die Resonanzfrequenz $f_0$ des Schwingkreises kann besonders einfach als Stelle des Minimums des Amplitudengangs bestimmt werden.

**Bezugszeichen**

1    Verfahren zum Betreiben eines magnetisch-induktiven Durchflussmessgeräts
2    Magnetisch-induktives Durchflussmessgerät
3    Messeinheit
4    Rohrleitung
5    Steuer- und Auswerteeinheit
6    Spule, erster Spulenteil
7    Spule, zweiter Spulenteil
8    Gehäuse
9    Eigenkapazität der Spule
10   Parallelschwingkreis
11   Unterbrechung des Messbetriebs
12   Anlegen einer Wechselspannung an den Schwingkreis
13   Bestimmung der Impedanz Z des Schwingkreises
14   Vergleich der gemessenen Impedanz Z mit dem Vergleichswert
15   Ausgabe einer Warnung
16   Kapazität zwischen Spule und Gehäuse
17   Serienschwingkreis

**Patentansprüche**

1.  Verfahren (1) zum Betreiben eines magnetisch-induktiven Durchflussmessgeräts (2), wobei das magnetisch-induktive Durchflussmessgerät (2) wenigstens eine Messeinheit (3) zur Messung des Durchflusses eines Mediums durch eine Rohrleitung (4),

ein Gehäuse (8) und wenigstens eine Steuer- und Auswerteeinheit (5) aufweist, wobei die Messeinheit (3) wenigstens eine Spule (6, 7) zur Erzeugung eines Magnetfelds aufweist, wobei wenigstens eine in Zusammenhang mit der Spule (6, 7) gebildete Kapazität (9, 16) vorhanden ist, wobei die Induktivität der Spule (6, 7) mit der Kapazität (9, 16) einen Schwingkreis (10, 17) bildet und wobei der Schwingkreis (10, 17) wenigstens eine ihn charakterisierende Messgröße aufweist,
**dadurch gekennzeichnet,**
**dass** der Schwingkreis (10, 17) mit einer Anregungsfrequenz f angeregt wird, dass die den Schwingkreis (10, 17) charakterisierende Messgröße bestimmt wird, dass in der Steuer- und Auswerteeinheit (5) ein Vergleichswert der den Schwingkreis (10, 17) charakterisierenden Messgröße für den leckagefreien Fall hinterlegt ist und dass die den Schwingkreis (10, 17) charakterisierende Messgröße mit dem Vergleichswert verglichen wird.

2.  Verfahren (1) nach Anspruch 1, **dadurch gekennzeichnet, dass** die Kapazität (9, 16) durch die Spule (6, 7) ausgebildet wird.

3.  Verfahren (1) nach Anspruch 1 oder 2, **dadurch gekennzeichnet, dass** als die den Schwingkreis (10, 17) charakterisierende Messgröße die Impedanz $\underline{Z}$ des Schwingkreises (10, 17) bestimmt wird, wobei die Bestimmung der Impedanz $\underline{Z}$ dadurch erfolgt, dass der Schwingkreis (10, 17) mit einer Wechselspannung der Anregungsfrequenz f, vorzugsweise der Resonanzfrequenz $f_0$ des Schwingkreises (10, 17) im leckagefreien Zustand, angeregt wird und dass sowohl der Spannungsverlauf als auch der Stromverlauf erfasst werden.

4.  Verfahren (1) nach einem der Ansprüche 1 bis 3, **dadurch gekennzeichnet, dass** als die den Schwingkreis (10, 17) charakterisierende Messgröße alternativ oder zusätzlich die Resonanzfrequenz $f_0$ des Schwingkreises (10, 17) bestimmt wird.

5.  Verfahren (1) nach einem der Ansprüche 3 oder 4, **dadurch gekennzeichnet, dass** der Amplitudengang des Schwingkreises (10, 17) bestimmt wird und dass die Resonanzfrequenz $f_0$ des Schwingkreises (10, 17) als Stelle des Extremums des Amplitudengangs bestimmt wird.

6.  Verfahren (1) nach einem der Ansprüche 3 bis 5, **dadurch gekennzeichnet, dass** die Kapazität (9) parallel zur Induktivität der Spule (6, 7) angeordnet ist und dass die Resonanzfrequenz $f_0$ des Schwingkreises (10) als Stelle des Maximums des Amplitudengangs bestimmt wird.

7.  Verfahren (1) nach einem der Ansprüche 3 bis 5, **dadurch gekennzeichnet, dass** die Kapazität (16) in Reihe mit der Induktivität der Spule (6, 7) angeordnet ist und dass die Resonanzfrequenz $f_0$ des Schwingkreises (17) als Stelle des Minimums des Amplitudengangs bestimmt wird.

8. Verfahren (1) nach einem der Ansprüche 1 bis 7, **dadurch gekennzeichnet, dass** eine Warnung ausgegeben wird, wenn die den Schwingkreis (10, 17) charakterisierende Messgröße von dem Vergleichswert abweicht oder außerhalb eines Abweichungsintervalls um den Vergleichswert liegt.

9. Magnetisch-induktives Durchflussmessgerät (2) mit einer Messeinheit (3) zur Messung des Durchflusses eines Mediums durch eine Rohrleitung (4), mit einem Gehäuse (8) und mit einer Steuer- und Auswerteeinheit (5), wobei die Messeinheit (3) wenigstens eine Spule (6, 7) zur Erzeugung eines Magnetfelds aufweist, wobei wenigstens eine in Zusammenhang mit der Spule (6,7) stehende Kapazität (9, 16) vorhanden ist, wobei die Induktivität wenigstens einer Spule (6, 7) mit der Kapazität (9, 16) einen Schwingkreis (10, 17) bildet und wobei der Schwingkreis (10, 17) wenigstens eine ihn charakterisierende Messgröße aufweist,
**dadurch gekennzeichnet,**
**dass** die Steuer- und Auswerteeinheit (5) derart ausgestaltet ist, dass sie, wenn der Schwingkreis (10, 17) mit einer Anregungsfrequenz f angeregt wird, die den Schwingkreis (10, 17) charakterisierende Messgröße bestimmt, dass in der Steuer- und Auswerteeinheit (5) ein Vergleichswert der den Schwingkreis (10, 17) charakterisierenden Messgröße für den leckagefreien Fall hinterlegt ist und dass die Steuer- und Auswerteeinheit (5) die den Schwingkreis (10, 17) charakterisierende Messgröße mit dem Vergleichswert vergleicht.

10. Magnetisch-induktives Durchflussmessgerät (2) nach Anspruch 9, **dadurch gekennzeichnet, dass** die Steuer- und Auswerteeinheit (5) derart ausgestaltet ist, dass sie im Betrieb ein Verfahren nach einem der Ansprüche 1 bis 8 durchführt.

**Claims**

1. Method (1) for operating a magnetic-inductive flowmeter (2), wherein the magnetic-inductive flowmeter (2) has at least one measuring unit (3) for measuring the flow of a medium through a pipe (4), a housing (8) and at least one control and evaluation unit (5), wherein the measuring unit (3) has at least one coil (6, 7) for generating a magnetic field, wherein at least one capacitance (9, 16) formed in connection with the coil (6, 7) is present, wherein the inductance of the coil (6, 7) with the capacitance (9, 16) forms a resonant circuit (10, 17), and wherein the resonant circuit (10, 17) has at least one measured variable characterizing it,
**characterized in**
**that** the resonant circuit (10, 17) is excited at an excitation frequency f, that the measured variable characterizing the resonant circuit (10, 17) is determined, that a comparison value of the measured variable characterizing the resonant circuit (10, 17) for the leakage-free case is stored in the control and evaluation unit (5), and that the measured variable characterizing the resonant circuit (10, 17) is compared with the comparison value.

2. Method (1) according to claim 1, **characterized in that** the capacitance (9, 16) is formed by the coil (6, 7).

3. Method (1) according to claim 1 or 2, **characterized in that** the impedance $\underline{Z}$ of the resonant circuit (10, 17) is determined as the measured variable characterizing the resonant circuit (10, 17), wherein the determination of the impedance is carried out **in that** the resonant circuit (10, 17) is excited with an alternating voltage of the excitation frequency f, preferably the resonant frequency $f_0$ of the resonant circuit (10, 17) in the leakage-free state, and that both the voltage course and the current course are detected.

4. Method (1) according to any one of claims 1 to 3, **characterized in that** the resonant frequency $f_0$ of the resonant circuit (10, 17) is determined alternatively or additionally as the measured variable characterizing the resonant circuit (10, 17).

5. Method (1) according to any one of claims 3 or 4, **characterized in that** the amplitude response of the resonant circuit (10, 17) is determined and that the resonant frequency $f_0$ of the resonant circuit (10, 17) is determined as the extremum of the amplitude response.

6. Method (1) according to any one of claims 3 to 5, **characterized in that** the capacitance (9) is arranged parallel to the inductance of the coil (6, 7) and that the resonant frequency $f_0$ of the resonant circuit (10) is determined as the maximum of the amplitude response.

7. Method (1) according to any one of claims 3 to 5, **characterized in that** the capacitance (16) is arranged in series with the inductance of the coil (6, 7) and that the resonant frequency $f_0$ of the resonant circuit (17) is determined as the minimum of the amplitude response.

8. Method (1) according to any one of the claims 1 to 7, **characterized in that** a warning is issued if the measured variable characterizing the resonant circuit (10, 17) deviates from the comparison value or lies outside a deviation interval around the comparison value.

9. Magnetic-inductive flowmeter (2) having a measuring unit (3) for measuring the flow of a medium through a pipe (4), having a housing (8) and having a control and evaluation unit (5), wherein the measuring unit (3) has at least one coil (6, 7) for generating a magnetic field, wherein at least one capacitance (9, 16) is present in connection with the coil (6, 7), wherein the inductance of at least one coil (6, 7) with the capacitance (9, 16) forms a resonant circuit (10, 17), and wherein the resonant circuit (10, 17) has at least one measured variable characterizing it, **characterized in**
**that** the control and evaluation unit (5) is designed such that, when the resonant circuit (10, 17) is excited at an excitation frequency f, it determines the measured variable characterizing the resonant circuit (10, 17), that the control and evaluation unit (5) has a stored comparison value of the measured variable characterizing the oscillating circuit (10, 17) for the leakage-free case, and that the control and evaluation unit (5) compares the measured variable characterizing the resonant circuit (10, 17) with the comparison value.

10. Magnetic-inductive flowmeter (2) according to claim 9, **characterized in that** the control and evaluation unit (5) is designed in such a manner that it carries out a method according to any one of claims 1 to 8 during operation.

**Revendications**

1. Procédé (1) de mise en oeuvre d'un débitmètre à induction magnétique (2), dans lequel le débitmètre à induction magnétique (2) comporte au moins une unité de mesure (3) destinée à mesurer le débit d'un fluide à travers une canalisation (4), un boîtier (8) et au moins une unité de commande et d'évaluation (5), dans lequel l'unité de mesure (3) comprend au moins une bobine (6, 7) destinée à générer un champ magnétique, dans lequel au moins une capacité (9, 16) formée en association avec la bobine (6, 7) est présente, dans lequel l'inductance de la bobine (6, 7) forme un circuit résonnant (10, 17) avec la capacité (9, 16) et dans lequel le circuit résonnant (10, 17) présente au moins une grandeur de mesure qui le caractérise, **caractérisé en ce que** le circuit résonnant (10, 17) est excité à une fréquence d'excitation f, **en ce que** la grandeur de mesure qui caractérise le circuit résonnant (10, 17) est déterminée, **en ce qu'**une valeur de comparaison de la grandeur de mesure qui caractérise le circuit résonnant (10, 17) est mémorisée pour le cas sans fuite dans l'unité de commande et d'évaluation (5) et **en ce que** la grandeur de mesure qui caractérise le circuit résonnant (10, 17) est comparée à la valeur de comparaison.

2. Procédé (1) selon la revendication 1, **caractérisé en ce que** la capacité (9, 16) est formée par la bobine (6, 7).

3. Procédé (1) selon la revendication 1 ou 2, **caractérisé en ce que** l'impédance $\underline{Z}$ du circuit résonnant (10, 17) est déterminée comme étant la grandeur de mesure qui caractérise le circuit résonnant (10, 17), dans lequel la détermination de l'impédance $\underline{Z}$ est effectuée en excitant le circuit résonnant (10, 17) avec une tension alternative présentant la fréquence d'excitation f, de préférence la fréquence de résonnance $f_0$ du circuit résonnant (10, 17) à l'état sans fuite, et en obtenant à la fois la courbe de tension et la courbe de courant.

4. Procédé (1) selon l'une des revendications 1 à 3, **caractérisé en ce que** la fréquence de résonance $f_0$ du circuit résonnant (10, 17) est déterminée alternativement ou en de manière supplémentaire comme étant la grandeur de mesure qui caractérise le circuit résonant (10, 17).

5. Procédé (1) selon l'une des revendications 3 ou 4, **caractérisé en ce que** la réponse en amplitude du circuit résonnant (10, 17) est déterminée et **en ce que** la fréquence de résonance $f_0$ du circuit résonnant (10, 17) est déterminée comme étant la position de l'extremum de la réponse en amplitude.

6. Procédé (1) selon l'une des revendications 3 à 5, **caractérisé en ce que** la capacité (9) est disposée parallèlement à l'inductance de la bobine (6, 7) et **en ce que** la fréquence de résonance $f_0$ du circuit résonnant (10) est déterminée comme étant la position du maximum de la réponse en amplitude.

7. Procédé (1) selon l'une des revendications 3 à 5, **caractérisé en ce que** la capacité (16) est disposée en série avec l'inductance de la bobine (6, 7) et **en ce que** la fréquence de résonance $f_0$ du circuit résonant (17) est déterminée comme étant la position du minimum de la réponse en amplitude.

8. Procédé (1) selon l'une des revendications 1 à 7, **caractérisé en ce qu'**un avertissement est émis si la grandeur de mesure qui caractérise le circuit oscillant (10, 17) s'écarte de la valeur de comparaison ou si elle se situe en-dehors d'un intervalle d'écart d'une valeur égale à la grandeur de comparaison.

9. Débitmètre magnétique à induction (2) comportant une unité de mesure (3) destinée à mesurer le débit d'un fluide à travers une canalisation (4), comportant un boîtier (8) et une unité de commande et d'évaluation (5), dans lequel l'unité de mesure (3) comporte au moins une bobine (6, 7) destinée à générer un champ magnétique, dans lequel au moins une capacité (9, 16) qui est associée à la bobine (6, 7) est présente, dans lequel l'inductance d'au moins une bobine (6, 7) forme un circuit résonnant (10, 17) avec la capacité (9, 16) et dans lequel le circuit résonnant (10, 17) présente au moins une grandeur de mesure qui le caractérise, **caractérisé en ce que** l'unité de commande et d'évaluation (5) est conçue de telle sorte que, lorsque le circuit résonnant (10, 17) est excité à une fréquence d'excitation f, elle détermine la grandeur de mesure qui caractérise le circuit résonnant (10, 17), **en ce qu'**une valeur de comparaison de la grandeur de mesure qui caractérise le circuit oscillant (10, 17) est mémorisée pour le cas sans fuite dans l'unité de commande et d'évaluation (5) et **en ce que** l'unité de commande et d'évaluation (5) compare la grandeur de mesure qui caractérise le circuit oscillant (10, 17) à la grandeur de comparaison.

10. Débitmètre magnétique à induction (2) selon la revendication 9, **caractérisé en ce que** l'unité de commande et d'évaluation (5) est conçue de telle sorte que, lors de son fonctionnement, elle met en oeuvre un procédé selon l'une des revendications 1 à 8.

1

| | 11 |
| | 12 |
| | 13 |
| | 14 |
| | 15 |

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1285237 B1
- US 2010288054 A1
- JP 2005207984 A
- US 20100100026 A1